# EUROPÄISCHE PATENTSCHRIFT

(11) **EP 1 782 148 B1**
(45) Veröffentlichungstag und Bekanntmachung des Hinweises auf die Patenterteilung: **21.09.2011**
(21) Anmeldenummer: 04762445.7
(22) Anmeldetag: 21.07.2004
(51) Int. Cl.: G06F 21/24

(54) **BEWEISSICHERES UND SCHNELLES WORM-SPEICHERSYSTEM AUF FESTPLATTENBASIS**
RAPID ARCHIVABLE WORM MEMORY SYSTEM BASED ON A HARD DISC
SYSTEME DE MEMOIRE NON REINSCRIPTIBLE, RAPIDE ET A DOCUMENTS POUVANT SERVIR DE PREUVE, SUR LA BASE D'UN DISQUE DUR

(43) Veröffentlichungstag der Anmeldung: 09.05.2007
(73) Patentinhaber: ITernity GmbH, 79111 Freiburg (DE)
(72) Erfinder: BUGOVICS, Jozsef, 06254 Zweimen OT Dölkau (DE)
(74) Vertreter: Weihrauch, Frank
(86) Internationale Anmeldenummer: PCT/DE2004/001595
(87) Internationale Veröffentlichungsnummer: WO 2006/010347

(56) Entgegenhaltungen:
- WO-A-01/18633
- US-B1- 6 185 661
- KARL FRÖHLICH: "WORM-Storage: Festplatten als Archivmedium" SPEICHERGUIDE.DE, [Online] 21. April 2004 (2004-04-21), XP002323043 Gefunden im Internet: URL:http://www.speicherguide.de/magazin/po p_print_artikel.asp?auswahl=117&todo=1&the ID=387> [gefunden am 2005-03-30]
- NETWORK APPLIANCE, INC.: "SnapLock Compliance and SnapLock Enterprise Software"[Online] 20. Juli 2004 (2004-07-20), XP002323044 Gefunden im Internet: URL:http://web.archive.org/web/20040720011 613/http://www.netapp.com/ftp/snaplock.pdf > [gefunden am 2005-03-30]

## Beschreibung

Die Erfindung bezeichnet ein System zum sicheren und schnellen Speichern von digitalen Inhalten auf elektronische Massenspeicher unter besonderer Berücksichtigung, dass das Speicherverfahren vorzugsweise für juristisch relevante Informationen angewandt werden soll, die nur einmal geschrieben, aber oft wieder gelesen werden können (WORM).

Die juristisch sichere Speicherung von Daten erhält eine immer größere Stellenordnung in unserer Gesellschaft, da ein zunehmendes Maß an Korrespondenz nicht mehr papiergebunden abgewickelt wird und damit die Beweisführung auch nicht mehr papiergebunden möglich ist. Oft werden papiergebundene Datenträger zu Archivierungszwecken ebenfalls digital gespeichert, weil die Suche und Lagerung der Papierunterlagen kaum noch effizient möglich ist. Bei solchen Prozessen fallen große Mengen an relativ kleinen Datensätzen, wie für eine Seite Papier mit ca. 50-100 KB, an. Diese müssen, je nach gesetzlichen Vorschriften, bis zu 30 Jahre zuverlässig und unveränderbar gespeichert werden.
Die Speicherung der Daten erfolgte bisher oft auf sogenannten WORM-Tapes oder Optical-WORM-CD's. Diese magnetooptischen Speicher können nur einmal beschrieben, aber beliebig oft gelesen werden. Der Nachteil dieser Medien ist der beschränkte Speicherplatz auf der CD oder dem Band. Um dies zu umgehen, wurden mechanische Systeme (Jukeboxen) eingeführt, die Speicherträger im Lese-Schreibgerät auswechseln. Da jedoch die Schreib- und Lesegeschwindigkeit dieser Medien relativ gering ist, haben sich zunehmend Systeme etabliert, die einen schnelleren Festplattenspeicher als Cachesystem vorschalten. Hierbei entstehen jedoch erhebliche Kosten und die mechanische Anfälligkeit der eigentlichen Systeme zum Lesen und Speichern der Daten bleibt weiterhin bestehen. In jüngster Vergangenheit, ist man deshalb auf die Nutzung von redundanten Festplattenspeichern in Verbindung mit einer intelligenten Software übergegangen. Dabei stellt die Software die WORM-Eigenschaft der eigentlich jederzeit wiederbeschreibbaren Hardware sicher. Diese Sicherstellung erfolgt zumeist durch eine softwaretechnische Schreibblockade von bereits geschriebenen Dateien.

Im dem Dokument Karl Fröhlich: "WORM-Storage: Festplatten als Archivmedium" Speicherguide.de, 21. April 2004 ist ein solcher redundanter Festplattenspeicher in Form eines Raid-Systems genannt. Dem Grundprinzip nach werden im Raid-System, in denen Daten in einer Verzeichnisstruktur abgelegt und mittels einer speziellen Software auf nur Lesen gesetzt, wodurch den Daten der WORM-Status verliehen wird und diese nicht mehr veränderbar sind.

Die zur Erzielung des WORM-Status der Dateien im Raid-System genutzte spezielle Software wird in der Veröffentlichung der Network Appliance, Inc.: "SnapLock Compliance and SnapLock Enterprise Software", 20. Juli 2004 umrissen.
Mit der SnapLock Software können auf Speichersystemen WORM-Speicherbereiche angelegt werden, die nicht löschbar sind. Zur weiteren Sicherheit der in diesen Speicherbereichen abgelegten unveränderbaren WORM-Daten sind bekannte Sicherheitssysteme, wie zur Zugriffskontrolle und Verschlüsselung sowie die Protokollierung von Zugriffen in die Software implementiert.

Ein Verfahren zur softwaretechnischen Schreibblockade wird unter anderem auch in der Druckschrift US 6,185,661 offenbart, bei dem ein Kontrollprogramm im Systemcache eine Schreibanfrage empfängt, prüft ob die Schreibanfrage auf einen Speicherbereich zum Lesen und Schreiben oder Nur-Lesen gerichtet ist, wobei dann im Ergebnis der Prüfung nur Anfragen auf Schreib-/Lesespuren fortgesetzt werden.

Aus der Druckschrift WO 01/18633 ist ein System und Verfahren zum sicheren Speichern, Übertragen und Wiedergewinnen inhaltsadressierbarer Informationen bekannt, nach dem ein Identifizierer für eine Beschreiberdatei von beliebig abgelegten Dateien erzeugt wird und die Dateien sowie die Beschreiberdatei unter Verwendung des Identifizierers als Schlüssel verschlüsselt werden, mit dem diese auch wieder entschlüsselt werden und gleichzeitig die Integrität der Datei bestätigt werden können.
Das Wiedergewinnen der in beliebiger Weise abgelegten Dateien erfolgt, indem der Identifizierer als Schlüssel zum Entschlüsseln der Beschreiberdatei der Dateien bereitgestellt wird.

Da Software nicht gegen Modifikationen und gezielte Angriffe gefeit ist, ergeben sich besondere Sicherheitsanforderungen an ein solches System. Gleichzeitig werden bestehende Betriebssysteme eingesetzt, die per Definition schon unsicher sind und nicht für die massenhafte Speicherung von kleinen Dateien optimiert wurden. Damit sind die eigentlich schnellen Harddiskspeicher oft ebenfalls langsam, wenn es um das Schreiben und Lesen von vielen keinen Dateien geht, je nach Anwendung sind die Sicherheitssysteme einem theoretischen böswilligen Angriff auf das System ebenfalls nicht gewachsen. Eine nachträgliche Änderung oder Verfälschung der Daten ist möglich, ohne dass ein solcher Vorgang nachweisbar oder nachvollziehbar wäre. Die Entwicklung eigener sicherer Betriebssysteme gestaltet sich sehr aufwendig und würde das entsprechende Endprodukt für breite Konsumentenkreise wesentlich verteuern.

Die Aufgabe der Erfindung besteht darin, ein Verfahren aus der Kombination von Soft- und Hardware zu schaffen, welches ein besonders schnelles Schreiben und Lesen von kleinen Dateien, wie e-Mails und gescannten Dokumenten, für juristisch relevante, beweissichere WORM-Datenspeicherung ermöglicht. Insbesondere soll das Verfahren unter Nutzung heute verfügbarer Betriebssysteme und Standardhardware umgesetzt werden können, wobei die Nachteile dieser Betriebsysteme bei der Verarbeitung von vielen kleinen Dateien und die Unsicherheit der Datenspeicherung durch die Architektur der Hardware und den Ablauf des Verfahrens umgangen werden.

Die Aufgabe wird durch die im Patentanspruch 1 aufgeführten Merkmale gelöst. Bevorzugte Weiterbildungen ergeben sich aus den Unteransprüchen.

Der Ablauf des erfindungsgemäßen Verfahrens erfolgt unter Verwendung einer grundsätzlich bekannten Hardwarekonfiguration mit einer CPU-Einheit mit einem oder mehreren Prozessoren sowie üblicher erforderlicher Hardware-Elemente eines PC's mit einem Bussystem zwischen der CPU-Einheit und einem ersten RAID-Controller, der mit einem Massenspeicher in Form einer ersten Harddisk verbunden ist, auf der ein Betriebssystem und eine WORM-Serversoftware gespeichert sind, des weiteren ist eine weitere Harddisk als Massenspeicher für den eigentlichen Work-Bereich mit dem ersten RAID-Controller verbunden, auf der die zu schreibenden Daten bearbeitet werden und einem internen oder externen Bussystem zu einem Massenspeicherbereich mit einem zweiten RAID-Controller mit dem eine Vielzahl von Massenspeichereinheiten verbunden sind, auf denen die zu speichernden Daten systematisch abgelegt werden.
Das zuvor beschriebene Hardwaresystem wird selektiv durch die WORM-Serversoftware gesteuert, die eine API (Application Programming Interface) zur Ansprache des gesamten Systems zur Verfügung stellt. Diese WORM-Serversoftware wird auf einem Standard Betriebssystem abgewickelt.

Die WORM-Serversoftware weist neben der API weitere wesentlichen Elemente in Form einer Userverwaltung, in der die Rechte der einzelnen Nutzer der API konfiguriert werden, einer Securityverwaltung, in der die Sicherheitsprozesse wie Verschlüsselung, Zertifikatsvergabe, Integritätsprüfung abgewickelt werden, einer Contentverwaltung, die die Art der Speicherung und die Zusammensetzung der Content Storage Container (CSC) managt und einem eigentlichen Containermanagement, das für die Schreib- und Leseoperationen und damit für die Ablageorganisation der Daten zuständig ist.
Des Weiteren ist im System aus Hard- und Software eine Administrationsschnittstelle implementiert, über die autorisierte Mandanten auf das System und dessen Speicher über Netzwerke zugreifen können.

Der Ablauf des Verfahrens beinhaltet im Wesentlichen fünf Schritte.

In einem ersten Schritt erfolgt das Konfigurieren der Mandanten des Systems, über die WORM-Serversoftware, indem über die Administrationsschnittstelle einzelne "Mandanten" in Form anderer Softwaresysteme, denen der Zugriff erlaubt werden soll, mittels der Vergabe eines Usernamens und Passwortes durch den Administrator autorisiert werden, auf das Speichersystem zuzugreifen.

Das Konfigurieren eines Content Storage Containers (CSC) erfolgt in einem zweiten Schritt, wie auch in allen folgenden Schritten durch die WORM-Serversoftware, wobei durch den Administrator einzelne CSC angelegt werden. Der CSC bekommt einen eindeutigen Namen zugewiesen. Gleichzeitig wird - unter dem aktuellen Betriebssystem ein Dateiverzeichnis, sowohl im Work-Bereich der zweiten Harddisk als auch im Massenspeicherbereich, die auf dem gleichen Rechner sein können, aber auch auf einem NAS-Server oder in einem SAN-System, angelegt.
Der zukünftigen Speichergröße des CSC sind keine theoretischen Grenzen gesetzt. Der zur Verfügung stehende Speicher kann auch nachträglich erweitert werden, ohne auf die Ablauflogik Einfluss auszuüben.
Mit der Erzeugung des CSC werden auch Eigenschaften, wie Kompressionsraten, Verschlüsselungsstärke, Zeit, bis wann die Daten aufgehoben - oder gelöscht werden sollen, Zeitfenster, in der frisch geschriebene Daten gelöscht werden dürfen etc., gespeichert.

Im dritten Schritt erfolgt das Schreiben von Daten in den Content Storage Container. Dies geschieht indem die einzelnen Dokumente, wie e-Mails, Scanns, in digitaler Form an das System übergeben sowie optional mit einer Beschreibung beinhaltenden XML Datei, und dem Namen des CSC, in dem die Daten gespeichert werden sollen, versehen werden. Das Speichersystem prüft die Berechtigung des Mandanten und generiert einen eindeutigen Dateinamen für die abzulegenden digitalen Daten. Dieser Dateiname besteht aus dem aktuellen Datum und der aktuellen Zeit plus einer eindeutig fortlaufenden System-ID für jede Datei. Die Daten selber werden mit einer eindeutigen Hash-Prüfsumme versehen und im aktuellen Work-Unterverzeichnis des CSC gespeichert. Dabei werden die aktuellen Verzeichnisse nach zeitlichen Kriterien generiert.
So generiert das Speichersystem automatisch einen Pfad wie: "CSCNAME/Jahr/Monat/TAG/Stunde/..." - hier werden die Dateien physisch gespeichert. Nach dem erfolgreichen Speichern der einzelnen Datei wird ein Referenzname für die Datei an die schreibende Partei zurückgegeben.
Durch dieses verteilte Ablageverfahren wird sichergestellt, dass nicht in einem Verzeichnis eine hohe Anzahl von Dateien entsteht, die zur Verlangsamung des Betriebssystems und damit zur Verlangsamung des gesamten Systems führen würde.

In einem vierten Schritt wird ein Container erzeugt, wobei durch externen Aufruf oder einen automatischen internen Prozess aus der Vielzahl der einzelnen Dateien im Work-Verzeichnis eine neue komprimierte Datei als Container erzeugt wird. Jede einzelne Datei, im aktuellen Work-Verzeichnis, wird dabei erst mit einer eindeutigen Prüfsumme versehen und dann über Kompressionsalgorithmen komprimiert und in die größere Container-Datei gespeichert. Diese große Container-Datei kann dann entsprechend in bekannter Weise verschlüsselt abgelegt werden. Das Passwort wird dabei aus den Dateinamen und einem festen System Schlüssel generiert, indem darüber ein eindeutiger Hash-Wert (Prüfsumme) gebildet wird. Mit Hilfe des Systemschlüssels und des Dateinamens kann das Passwort jederzeit dynamisch neu generiert werden. Der Systemschlüssel ist eine feste Variable, die beispielsweise nur dem Daten ablegenden Mandanten bekannt ist. Die so komprimierte und verschlüsselte Container-Datei wird nun aus dem Work-Bereich in den Massenspeicherbereich des CSC-Containers kopiert. Dadurch, dass in den Massenspeicherbereich nur einmal geschrieben wird, wenn die komprimierten Datei im Work-Bereich fertiggestellt wurde, wird der Massenspeicher weitestgehend linear beschrieben. Dadurch ist die Leseoperation besonders schnell, weil der Lese-/Schreibkopf der Festplatte, oder anderer Laufwerke, linear auf die Daten zugreifen kann. Gleichzeitig wurde durch die verschachtelten Verzeichnisse und durch die Zusammenfassung einzelner Dateien in einer komprimierte Container-Datei der Bedarf des Speicherplatzes reduziert und auch die Anzahl der physisch gespeicherten Dateien, die einzeln im Dateisystem des Betriebssystems adressiert werden müssen. All diese Teilverfahren führen dazu, dass eine optimierte Ablage der Dateien erfolgt ist, dies erlaubt viele kleine Dateien, sehr effizient unter einem regulären Betriebssystem abzuspeichern und dennoch sehr schnell auf die Daten zuzugreifen. Gleichzeitig mit der im Massenspeicherbereich abgelegte Container Datei wird eine XML-Sicherheitsdatei abgelegt, ebenfalls mit dem selben Namen wie die Container-Datei. Diese Sicherheitsdatei enthält die Namen aller einzelnen Dateien die sich in der Container-Datei befinden, und die einzelnen eindeutigen Prüfsummen dieser Dateien. Über diese zusätzliche Sicherheitsdatei wird eine elektronische Signatur mit der entsprechenden eindeutigen Prüfsumme erzeugt.
Die Signatur und Prüfsumme werden zusammen mit dem Dateinamen zu einem Timestamp-Server versandt, der auch in Form einer Sicherheitshardware oder Sicherheitssoftware als Bestandteil des Systems ausgeführt sein kann. Dieser signiert zusammen mit der offiziellen Zeit ,zumeist von einer amtlich anerkannten Zeitquelle, die Signatur und Prüfsumme und den Dateinamen der Sicherheitsdatei. Diese wird dann zusammen mit der Sicherheitsdatei gespeichert. Damit können an den Daten keine Änderungen mehr vorgenommen werden, ohne dass dies beim Lesen der Daten auffallen würde.
Das Speichersystem verhindert zwar das physische Schreiben auf einmal erzeugte Daten durch Softwareschreibschutz, dennoch könnten interne Angreifer wie Administratoren versuchen, die Daten über das Betriebssystem zu manipulieren. Mit dem oben aufgeführten Schutzmechanismus ist dies nicht mehr möglich. Um einen authentischen Datencontainer zu erstellen, muss eine gültige Timestamp erzeugt werden. Diese wird aber nur mit der aktuellen Zeit vergeben und kann nachträglich nicht erzeugt werden.

Das Lesen von Daten und die Überprüfung der Integrität erfolgt in einem fünften Schritt.

Um einmal gespeicherte Daten zu lesen, werden von dem lesenden Mandanten nur die System-ID der Datei benötigt, der gültige Systemschlüssel und entsprechende Zugriffsberechtigungen. Über die System-ID findet das Speichersystem heraus, zu welchem Datum die Datei erzeugt wurde. Damit ist eindeutig zugeordnet, in welcher Container-Datei in welchem Verzeichnis die Daten abgelegt wurden.
Auf diese komprimierte Datei und auf die dazugehörige Sicherheitsdatei wird zugegriffen.
Die Prüfsummen und Signaturen werden auf Gültigkeit überprüft. Ist die Integrität der komprimierten Datei gegeben, wird die entsprechenden Datei mit der System-ID entpackt und dem lesenden Mandanten übermittelt.
Die gespeicherten komprimierten Dateien werden über einen laufenden Hintergrundprozess regelmäßig auf ihre Integrität überprüft. Sind Unregelmäßigkeiten festgestellt worden, so werden sofort Alarmierungsmechanismen in Gang gesetzt. Der Vorgang wird auch auf dem System in einem Log-File dokumentiert.

Die Vorteile der Erfindung bestehen insbesondere darin, in den heute verfügbaren Betriebssystemen wie Windows oder Linux, ohne Modifikationen, eine große Anzahl von kleinen Dateien sicher zu speichern und dabei eine hohe Lese- und Schreibgeschwindigkeit zu gewährleisten. Unter Berücksichtigung der Hardwarearchitektur, die auch aus heute verfügbaren Bestandteilen realisiert werden kann, ergibt sich ein preiswerter sowie juristisch sicherer und relevanter WORM-Speicher für Dokumente auf Basis von Standard-PC-Architekturelementen.

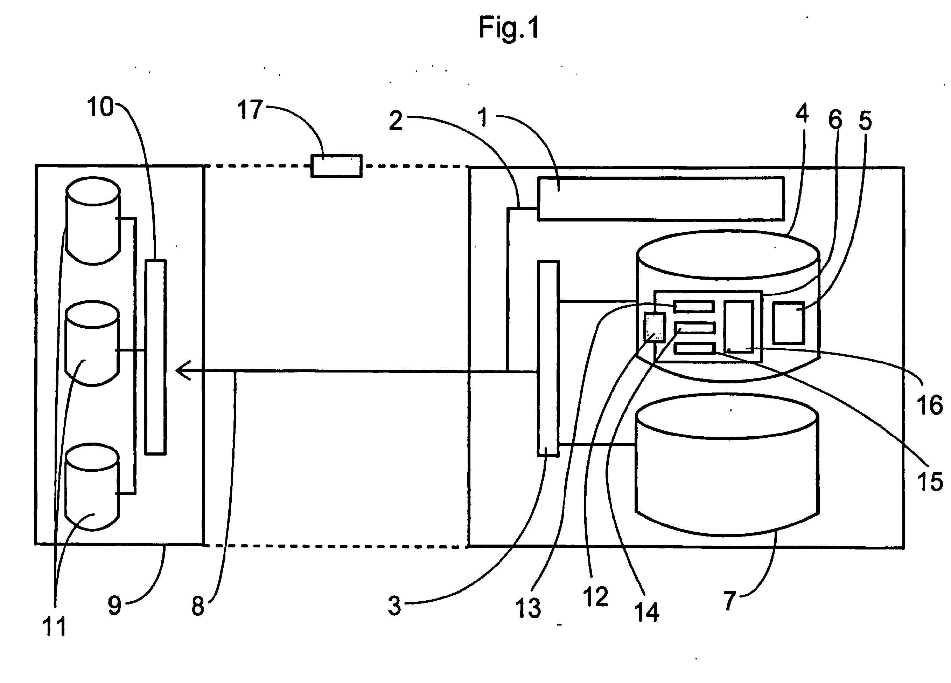

Das Verfahren gewährleistet durch spezielle Speichermechanismen und Sicherheitsverfahren eine flexible, sichere und schnelle Speicherung der Inhalte, insbesondere auch vieler kleiner Dokumente, bei einer preiswerten technischen Architektur auf Festplatten oder anderen wiederbeschreibbaren Massenspeichermedien. Hauptaugenmerk wird auf die Verwendung von Standardkomponenten, wie verfügbare Betriebsysteme und Hardware gelegt, wodurch eine preiswerte Lösung gegeben ist.
Die wesentlichen Elemente des Systems und deren Verknüpfungen werden in Fig. 1 dargestellt.

Die Systemkonfiguration besteht aus einer CPU-Einheit 1 mit einem oder mehreren Prozessoren und den notwendigen weiteren, hier nicht dargestellten und in die Beschreibung einbezogenen Elementen eines PC's, wie RAM, DMA, etc., einem Bussystem 2 zwischen der CPU-Einheit 1 und einem ersten RAID-Controller 3, der mit einem Massenspeicher in Form einer ersten Harddisk 4, auf der ein Betriebssystem 5 und eine WORM-Serversoftware 6 gespeichert sind, und einer zweiten Harddisk 7 als Massenspeicher, auf der sich der Work-Bereich zur Bearbeitung der zu schreibenden einzelnen Dateien befindet, verbunden ist und einem weiteren internen oder externen Bussystem 8 als Verbindung zu einem Massenspeicherbereich 9 mit einem zweiten RAID-Controller 10 mit dem eine Vielzahl von Massenspeichereinheiten 11 verbunden sind, auf denen die zu speichernden Daten systematisch abgelegt werden auf dem die zu speichernden Container-Dateien abgelegt werden.
Das Hardwaresystem wird selektiv durch die WORM-Serversoftware 6 gesteuert, die eine API 12 zur Ansprache des gesamten Systems zur Verfügung stellt.
Die WORM-Serversoftware 6 weist neben der API 12 als wesentliche Elemente eine Userverwaltung 13, in der die Rechte der einzelnen API Nutzer konfiguriert werden, eine Securityverwaltung 14, in der die Sicherheitsprozesse wie Verschlüsselung, Zertifikatsvergabe, Integritätsprüfung abgewickelt werden, eine Contentverwaltung 15, die die Art der Speicherung und die Zusammensetzung der Content Storage Container managt und ein eigentliches Containermanagement 16, das für die Schreib- und Leseoperationen und damit für die Ablageorganisation der Daten zuständig ist, auf.

In das System ist eine Administrationsschnittstelle 17 für den Zugang und Zugriff von autorisierten Mandanten implementiert.

### Verwendete Bezugszeichen

- 1: CPU-Einheit
- 2: Bussystem
- 3: erster RAID-Controller
- 4: erste Harddisk
- 5: Betriebssystem
- 6: WORM-Serversoftware
- 7: zweite Harddisk.
- 8: weiteres Bussystem
- 9: Massenspeicherbereich
- 10: zweiter RAID-Controller
- 11: Massenspeichereinheiten
- 12: API
- 13: Userverwaltung
- 14: Securityverwaltung
- 15: Contentverwaltung
- 16: Containermanagement
- 17: Administrationsschnittstelle

## Patentansprüche

1. Verfahren zum schnellen Schreiben und Lesen von kleinen Dateien für eine beweissichere WORM-Datenspeicherung unter Nutzung von Betriebssystemen und eines Systems aus Hardware mit autorisiertem Zugriff von Mandanten, **dadurch gekennzeichnet,**
**dass** sich auf einer ersten Harddisk (4) ein Betriebssystem (5) als auch eine WORM-Serversoftware (6), mit einer API (12), befinden und eine zweite Harddisk (7) als Work-Bereich und Cache dient sowie die Ablage der gesicherten Daten auf Massenspeichereinheiten (11) in Content Storage Containern (CSC) erfolgt,
**dass** mit der WORM-Serversoftware (6) in mehreren Schritten, die Reduktion der Anzahl der Dateien erfolgt und die sichere Speicherung vorgenommen wird, wobei
- in einem ersten Schritt ein Mandant konfiguriert wird, dem entsprechende Rechte im System zugeordnet werden;
- in einem zweiten Schritt ein CSC angelegt wird, dem ein eindeutiger Name zugewiesen wird, gleichzeitig im Work-Bereich der zweiten Harddisk (7) und im Massenspeicherbereich (9) ein Dateiverzeichnis erzeugt wird, dabei dem CSC Eigenschaften, wie Kompressionsraten, Verschlüsselungsstärke, Zeit - bis wann die Daten aufgehoben oder gelöscht werden sollen, Zeitfenster - in dem frisch geschriebene Daten gelöscht werden dürfen, zugeordnet werden, die bei der Benutzung des CSC's durch die WORM-Serversoftware (6) sichergestellt werden;
- in einem dritten Schritt das Schreiben von Daten in den CSC über die API (12) erfolgt, indem die einzelnen Dokumente in digitaler Form an das System übergeben und optional mit einer, eine Beschreibung beinhaltende XML-Datei und dem Namen des CSC, in dem die Daten gespeichert werden sollen, versehen werden, die WORM-Serversoftware (6) prüft die Berechtigung des Nutzers und generiert einen eindeutigen Dateinamen für die abzulegenden digitalen Daten, diese Daten selbst werden mit einer eindeutigen Prüfsumme versehen und im aktuellen Work-Unterverzeichnis des CSC gespeichert, wobei die aktuellen Verzeichnisse nach zeitlichen Kriterien generiert, die Dateien hier physisch gespeichert und nach dem erfolgreichen Speichern der einzelnen Datei ein Referenzname für die Datei an die schreibende Partei zurückgegeben werden;
- in einem vierten Schritt ein Container erzeugt wird, wobei durch externen Aufruf oder einen automatischen internen Prozess aus der Vielzahl der einzelnen Dateien im Work-Verzeichnis eine neue komprimierte Datei als Container erzeugt wird, indem jede einzelne Datei im aktuellen Work-Verzeichnis dabei erst mit einer eindeutigen Prüfsumme versehen und dann über Kompressionsalgorithmen komprimiert und in die größere Container-Datei gespeichert wird, die mit einem Passwort, das aus dem Dateinamen und einem festen Systemschlüssel generiert wird, verschlüsselt abgelegt werden kann, die so komprimierte und verschlüsselte Container-Datei wird nun aus dem Work-Bereich in den Massenspeicherbereich (9) des CSC-Containers kopiert, gleichzeitig wird mit der im Massenspeicherbereich (9) abgelegten Container-Datei eine XML-Sicherheitsdatei mit dem selben Namen wie die Container-Datei abgelegt, wobei diese Sicherheitsdatei die Namen aller einzelnen Dateien enthält, die sich in der Container-Datei befinden, und die einzelnen eindeutigen Prüfsummen dieser Dateien, über diese zusätzliche Sicherheitsdatei wird eine elektronische Signatur mit der entsprechenden eindeutigen Prüfsumme erzeugt, die Signatur und Prüfsumme werden zusammen mit dem Dateinamen zu einem Timestamp-Server versandt, dieser signiert zusammen mit der offiziellen Zeit ,zumeist von einer amtlich anerkannten Zeitquelle, die Signatur und Prüfsumme und den Dateinamen der Sicherheitsdatei, die Signatur des Timestamp-Server wird dann zusammen mit der Sicherheitsdatei gespeichert und
- in einem fünften Schritt erfolgt das Lesen von Daten und die Überprüfung der Integrität, wobei vom lesenden Mandanten nur die System-ID der Datei, der feste Systemschlüssel und entsprechende Zugriffsberechtigungen benötigt werden, die Prüfsummen und Signaturen auf Gültigkeit überprüft werden, ist dabei die Integrität der komprimierten Datei gegeben, wird die entsprechende Datei mit der System-ID entpackt und dem lesenden Mandanten übermittelt.

2. Verfahren nach Anspruch 1, **dadurch gekennzeichnet,**
**dass** der Zugriff des Mandanten auf das Speichersystem mittels eines, durch den Administrator vergebenen Usernamens und Passwortes autorisiert ist.

3. Verfahren nach Anspruch 1, **dadurch gekennzeichnet,**
**dass** die einzelnen CSC durch den Administrator angelegt werden.

4. Verfahren nach den Ansprüchen 1 und 3, **dadurch gekennzeichnet,**
**dass** mit der Erzeugung des CSC auch dessen Eigenschaften, wie Kompressionsraten, Verschlüsselungsstärke, Zeit, bis wann die Daten aufgehoben oder gelöscht werden sollen, Zeitfenster, in der frisch geschriebene Daten gelöscht werden dürfen etc., gespeichert werden.

5. Verfahren nach den Ansprüchen 1 und 3, **dadurch gekennzeichnet,**
**dass** das Dateiverzeichnis sowohl im Work-Bereich der zweiten Harddisk (7) als auch im Massenspeicherbereich (9), die beide auf dem gleichen Rechner, aber auch auf einem NAS-Server oder in einem SAN-System, angelegt sein können.

6. Verfahren nach Anspruch 1, **dadurch gekennzeichnet,**
**dass** der Dateiname für die abzulegenden digitalen Daten aus dem aktuellen Datum und der aktuellen Zeit plus einer eindeutig fortlaufenden System-ID besteht.

7. Verfahren nach den Ansprüchen 1 und 6, **dadurch gekennzeichnet,**
**dass** das Speichersystem für die Speicherung der Dateien im aktuellen Work-Unterverzeichnis des CSC-Verzeichnisses nach zeitlichen Kriterien automatisch einen Pfad wie: "CSCNAME/Jahr/Monat/TAG/Stunde/..." generiert.

8. Verfahren nach Anspruch 1, **dadurch gekennzeichnet,**
**dass** das Passwort für den Zugriff auf die Datei aus dem Dateinamen und einem festen Systemschlüssel und dem darüber eindeutigen Hash-Wert gebildet wird, wobei mit Hilfe des Systemschlüssels und des Dateinamens das Passwort jederzeit dynamisch neu generiert werden kann sowie der Systemschlüssel eine feste Variable ist, die beispielsweise nur dem Daten ablegenden Mandanten bekannt ist.

9. Verfahren nach Anspruch 1, **dadurch gekennzeichnet,**
**dass** die gespeicherten komprimierten Dateien über einen laufenden Hintergrundprozess regelmäßig auf ihre Integrität überprüft werden und bei Unregelmäßigkeiten sofort Alarmierungsmechanismen in Gang gesetzt werden, wobei der Vorgang auf dem System in einem Log-File dokumentiert wird.

10. Verfahren nach Anspruch 1, **dadurch gekennzeichnet,**
**dass** der Timestamp-Server in Form einer Sicherheitshardware Bestandteil des Systems ist.

11. Verfahren nach Anspruch 1, **dadurch gekennzeichnet,**
**dass** der Timestamp-Server in Form einer Sicherheitssoftware Bestandteil des Systems ist.

## Claims

1. Process for rapid writing and reading of small files for WORM data storage which preserves evidential integrity using operating systems and a system consisting of hardware with authorised access of clients, **characterised in that**,
on a first hard disc (4) an operating system (5) and also WORM server software (6), with an API (12), are located and a second hard disc (7) serves as a work area and cache and the secure data are loaded onto mass memory units (11) in content storage containers (CSCs),
that in a plurality of steps using the WORM server software (6) the number of files is reduced and secure storage is effected, wherein
- in a first step a client is configured, to whom corresponding rights are allocated in the system;
- in a second step a CSC is loaded, to which an unambiguous name is allocated, at the same time a file directory is produced in the work area of the second hard disc (7) and in the mass memory area (9) and properties, such as compression rates, degree of encryption, time - until the data are to be removed or deleted, time window - in which newly written data may be deleted, are allocated to the CSC, which properties are safeguarded by the WORM server software (6) upon use of the CSC;
- in a third step the data are written into the CSC via the API (12) **in that** the individual documents are transferred to the system in digital form, and are optionally provided with an XML file, containing a description, and with the name of the CSC in which the data are to be stored, the WORM server software (6) checks the authorisation of the user and generates an unambiguous file name for the digital data to be loaded, these data themselves are provided with an unambiguous checksum and stored in the current work subdirectory of the CSC, wherein the current directories are generated according to time criteria, the files are physically stored therein and after successful storage of the individual file a reference name for the file is given back to the writing party;
- in a fourth step a container is produced, wherein a new compressed file is produced as a container by external call-up or an automatic internal process from the large number of individual files in the work directory, **in that** each individual file in the current work directory is first provided with an unambiguous checksum and then compressed by compression algorithms and stored in the larger container file which can be loaded in encrypted form by means of a password which is generated from the file name and a fixed system key, the container file compressed and encrypted in this way is then copied from the work area into the mass memory area (9) of the CSC, at the same time an XML security file having the same name as the container file is loaded with the container file loaded in the mass memory area (9), wherein this security file contains the names of all individual files, which are located in the container file, and the individual unambiguous checksums of these files, by means of this additional security file an electronic signature is produced having the corresponding unambiguous checksum, the signature and checksum are sent together with the file name to a timestamp server, this, together with the official time, usually from an officially recognised time source, marks the signature and checksum and the file name of the security file, the signature of the timestamp server is then stored together with the security file and
- the reading of data and the integrity check are carried out in a fifth step, wherein the reading client requires only the system ID of the file, the fixed system key and corresponding access authorisations, the checksums and signatures are checked for validity, if the integrity of the compressed file is established the corresponding file with the system ID is unpacked and presented to the reading client.

2. Process as claimed in claim 1, **characterised in that** the access of the client to the memory system is authorised by means of a user name and password issued by the administrator.

3. Process as claimed in claim 1, **characterised in that** the individual CSCs are loaded by the administrator.

4. Process as claimed in claims 1 and 3, **characterised in that**, with the production of the CSC, its properties, such as compression rates, degree of encryption, time until the data are to be removed or deleted, time window in which newly written data may be deleted etc., are stored.

5. Process as claimed in claims 1 and 3, **characterised in that** the file directory can be loaded both in the work area of the second hard disc (7) and also in the mass memory area (9), which may both be on the same computer, but also on an NAS server or in a SAN system.

6. Process as claimed in claim 1, **characterised in that** the file name for the digital data to be loaded consists of the current data and the current time plus an unambiguously serial system ID.

7. Process as claimed in claims 1 and 6, **characterised in that** the memory system for storing the files in the current work subdirectory of the CSC directory in accordance with time criteria automatically generates a path such as:
"CSCNAME/Year/Month/DAY/Time/...".

8. Process as claimed in claim 1, **characterised in that** the password for access to the file is formed from the file name and a fixed system key and the hash value which is unambiguous in respect thereof, wherein with the aid of the system key and the file name the password can be regenerated dynamically at any time, and the system key is a fixed variable which is known e.g. only to the client loading the data.

9. Process as claimed in claim 1, **characterised in that** the stored compressed files are regularly checked for their integrity by an ongoing background process, and if irregularities are found alarm mechanisms are immediately actuated, wherein the process is documented on the system in a log file.

10. Process as claimed in claim 1, **characterised in that** the timestamp server in the form of security hardware is a component of the system.

11. Process as claimed in claim 1, **characterised in that** the timestamp server in the form of security software is a component of the system.

## Revendications

1. Procédé pour enregistrer et lire rapidement de petits fichiers pour une mémorisation non réinscriptible de données Worm pouvant servir de preuves, en utilisant des systèmes d'exploitation connus et un système composé d'un matériel informatique usuel avec accès autorisé pour des mandants,
**caractérisé en ce qu'**
- un premier disque dur (4) porte un système d'exploitation (5), un logiciel de serveur Worm (6) pour des documents pouvant servir de preuves, une interface de programmation d'application API (12), et un second disque dur (7) servant de zone de travail et de mémoire cache, le dépôt des données sécurisées s'effectuant sur des unités à mémoire de masse (11) dans des conteneurs d'enregistrement (CSC),
- le logiciel de serveur Worm (6) effectue en plusieurs étapes la réduction du nombre des fichiers ainsi que la mémorisation sécurisée,
selon lequel
* dans une première étape, on configure un mandant auquel on attribue des droits correspondants dans le système,
* dans une deuxième étape, on utilise un conteneur CSC auquel est attribué un nom unique et en même temps dans la zone de travail du deuxième disque dur (7) et dans la zone de mémorisation de masse (9) on génère un répertoire de données, tandis qu'on associe au conteneur CSC des caractéristiques correspondantes telles que des taux de compression, des densités de codage, la période après laquelle les données seront éliminées ou effacées, la fenêtre de temps pendant laquelle les données nouvellement inscrites peuvent être effacées, qui, lors de l'utilisation du conteneur CSC, sont sécurisées par le logiciel de serveur Worm (6),
* dans une troisième étape, on enregistre les données dans le conteneur CSC par l'interface API (12), les documents individuels étant transmis au système sous forme numérique et dotés en option d'un fichier XML contenant une description ainsi que du nom du conteneur CSC dans lequel doivent être mémorisées les données, le logiciel de serveur Worm (6) contrôle l'habilitation de l'utilisateur et génère un nom de fichier unique pour les données numériques à déposer qui sont elles-mêmes dotées d'une somme de contrôle unique et sont mémorisées dans le sous-répertoire actuel de travail du conteneur CSC, les répertoires actuels étant générés selon des critères temporels, les fichiers sont mémorisés physiquement, et une fois la mémorisation effectuée des fichiers individuels, un nom de référence pour celui-ci est renvoyé à la partie qui effectue l'enregistrement,
* dans une quatrième étape, on produit un conteneur, étant précisé que par appel externe ou par un processus interne automatique, à partir de la pluralité des fichiers individuels on produit dans le répertoire de travail, un nouveau fichier comprimé en tant que conteneur, **en ce que** chaque fichier individuel est d'abord doté dans le répertoire de travail actuel d'une somme de contrôle unique, et est ensuite comprimé au moyen d'algorithmes de compression puis enregistré dans le fichier-conteneur plus grand qui peut être déposé sous forme codée avec un mot de passe composé du nom du fichier et d'une clé fixe du système, ce fichier ainsi comprimé et codé est alors, à partir de la zone de travail, copié dans la zone de mémorisation de masse (9) du conteneur CSC, et en même temps que le fichier-conteneur on transfère dans la zone de mémorisation de masse (9) un fichier de sécurité XML avec le même nom que le fichier-conteneur, ce fichier de sécurité contenant les noms de tous les fichiers individuels qui se trouvent dans le fichier-conteneur, ainsi que les sommes de contrôle, individuelles, uniques, de ces fichiers et grâce à ce fichier de sécurité supplémentaire, on génère une signature électronique avec la somme de contrôle unique correspondante, on transmet cette signature et la somme de contrôle avec le nom du fichier à un serveur-horodateur qui signe avec le temps officiel donné le plus souvent par une horloge officielle, la signature, la somme de contrôle ainsi que les noms des fichiers contenus dans le fichier de sécurité, et la signature du serveur-horodateur étant ensuite mémorisés en même temps que ce fichier, et
* dans une cinquième étape on lit les données et on contrôle l'intégrité, le mandant en lecture seule n'ayant besoin que de l'identifiant de système ID du fichier, du code fixe du système et des habilitations d'accès correspondantes, on contrôle la validité des sommes de contrôle et des signatures, on établit l'intégrité des fichiers comprimés, et le fichier correspondant est désassemblé avec l'identifiant de système ID et transmis au mandant lecteur.

2. Procédé selon la revendication 1,
**caractérisé en ce que**
l'accès du mandant au système de mémoire est autorisé par l'intermédiaire d'un nom d'utilisateur et d'un mot de passe attribués par l'administrateur.

3. Procédé selon la revendication 1,
**caractérisé en ce que**
les conteneurs CSC individuels sont établis par l'administrateur.

4. Procédé selon les revendications 1 et 3,
**caractérisé en ce qu'**
avec la production du conteneur CSC, on enregistre également ses caractéristiques telles que les taux de compression, la densité de codage, la période après laquelle les données doivent être retirées ou effacées, les fenêtres de temps pendant lesquelles les données fraîchement enregistrées peuvent être effacées etc.

5. Procédé selon les revendications 1 et 3,
**caractérisé en ce que**
le répertoire de fichiers à la fois dans la zone de travail du deuxième disque dur (7) ainsi que dans la zone de mémoire de masse (9), peuvent être déposés tous les deux dans le même calculateur mais également sur un serveur NAS ou dans un système SAN.

6. Procédé selon la revendication 1,
**caractérisé en ce que**
le nom du fichier destiné à recevoir les données numériques à déposer est constitué de la date actuelle et de l'instant actuel ainsi que d'un identifiant de système ID, continu, clair.

7. Procédé selon les revendications 1 et 6,
**caractérisé en ce que**
le système de mémoire pour enregistrer des fichiers dans le sous-répertoire actuel du répertoire de conteneur CSC selon des critères temporels, génère automatiquement une série telle que « nom du CSC/année/mois/jour/heure/... ».

8. Procédé selon la revendication 1,
**caractérisé en ce que**
le mot de passe pour accéder au fichier est constitué du nom du fichier, d'une clé fixe de système et de la valeur Hash unique, et à l'aide de la clé du système et du nom du fichier, on peut à tout moment générer à nouveau dynamiquement le mot de passe, ainsi que la clé du système qui est une variable, par exemple connue seulement par le mandant qui dépose les données.

9. Procédé selon la revendication 1,
**caractérisé en ce qu'**
on contrôle régulièrement l'intégrité des fichiers comprimés mémorisés par l'intermédiaire d'un processus de fond courant et, dans le cas d'irrégularités, on met aussitôt en route des mécanismes d'alarme, l'opération étant documentée dans un fichier de consigne du système.

10. Procédé selon la revendication 1,
**caractérisé en ce que**
le serveur-horodateur est un composant du système en forme d'un matériel informatique de sécurité.

11. Procédé selon la revendication 1,
**caractérisé en ce que**
le serveur-horodateur est un composant du système en forme d'un logiciel de sécurité.
